(19) Europäisches Patentamt
European Patent Office
Office européen des brevets

(11) Numéro de publication : **0 105 778**
**B1**

(12) # FASCICULE DE BREVET EUROPÉEN

(45) Date de publication du fascicule du brevet : **18.09.85**

(51) Int. Cl.$^4$ : **C 01 B 33/04**

(21) Numéro de dépôt : **83401812.9**

(22) Date de dépôt : **16.09.83**

(54) **Procédé et dispositif pour la préparation de silane pur par réaction de chlorosilanes avec l'hydrure de lithium.**

(30) Priorité : **30.09.82 FR 8216434**

(43) Date de publication de la demande : **18.04.84 Bulletin 84/16**

(45) Mention de la délivrance du brevet : **18.09.85 Bulletin 85/38**

(84) Etats contractants désignés : **BE DE FR GB IT NL**

(56) Documents cités :
**CH-A- 388 917**
**FR-A- 1 323 193**
**FR-A- 2 365 518**
**CHEMICAL ABSTRACTS, vol. 96, no. 14, 5 avril 1982, page 141, colonne de gauche, résumé no. 106651k, COLUMBUS, Ohio (US)**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Grosbois, Jean**
**357 Parc de Cassan**
**F-95290 l'Isle-Adam (FR)**
Inventeur : **Jacubert, Serge**
**12, rue Jules Herbron**
**F-78220 Viroflay (FR)**
Inventeur : **Verdier, Jean-Michel**
**257, rue du Faubourg St-Martin**
**F-75010 Paris (FR)**

(74) Mandataire : **Savina, Jacques et al**
**RHONE-POULENC RECHERCHES Service Brevets Chimie et Polymères 25, quai Paul Doumer**
**F-92408 Courbevoie Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 105 778 B1

**Description**

La présente invention concerne un procédé et un dispositif pour la préparation de silane pur par réaction de chlorosilanes avec l'hydrure de lithium.

On a déjà décrit, par exemple dans les brevets des Etats-Unis d'Amérique nº 3 078 218 et 3 163 590, la réaction entre l'hydrure de lithium et des chlorosilanes en vue de la préparation de silane. La réaction peut s'écrire :

$$SiH_xCl_{4-x} + (4-x)LiH \rightarrow SiH_4 + (4-x)LiCl \quad (1)$$

comme chlorosilanes on utilise de préférence $HSiCl_3$ et/ou $SiCl_4$ qui correspondent à $x = 1$ et 0. La réaction se déroule dans un milieu de sels fondus à une température de l'ordre de 400 à 500 °C.

Les procédés décrits dans ces brevets américains ne permettent pas d'obtenir un silane suffisamment pur, de plus les sels sous-produits contiennent des quantités importantes d'hydrure de lithium, ce qui empêche leur recyclage éventuel sans traitement préalable.

La présente invention vise, notamment, à remédier à ces inconvénients en permettant d'obtenir un silane pur c'est-à-dire exempt de chlorosilanes et, des sels fondus qui peuvent être immédiatement utilisés à l'issue de la réaction.

La présente invention concerne en effet un procédé de préparation de silane par réaction de chlorosilanes avec l'hydrure de lithium dans un mélange de sels fondus dont la composition est voisine de la composition eutectique caractérisé en ce que

— le mélange de sels fondus est constitué par du chlorure de lithium, du chlorure de potassium et, éventuellement, d'autres chlorures d'alcalins ou d'alcalino-terreux,

— la réaction est effectuée en deux étapes :

a) dans la première étape, on opère la réaction entre des chlorosilanes et l'hydrure de lithium dans le mélange de sels fondus en mettant en œuvre une quantité de chlorosilanes en défaut par rapport à la quantité stœchiométrique nécessaire à la réaction avec l'hydrure de lithium ; ce défaut représente au moins 5 % et de préférence 5 à 20 % par rapport à ladite quantité stœchiométrique ; dans cette première étape, la quantité d'hydrure de lithium mise en œuvre représente au plus 20 % et de préférence est comprise entre 12 et 18 % en mole par rapport au mélange des sels fondus.

b) dans la deuxième étape, on opère la réaction entre l'hydrure de lithium non réagi provenant de la première étape, dissout dans le mélange de sels fondus et des chlorosilanes en mettant en œuvre une quantité de chlorosilanes en excès par rapport à la quantité stœchiométrique nécessaire à la réaction avec ledit hydrure de lithium, cet excès représente au moins 2 % et de préférence 2 à 10 % par rapport à ladite quantité stœchiométrique.

Le mélange de sels fondus mis en œuvre selon le procédé de l'invention est constitué par du chlorure de lithium, du chlorure de potassium et éventuellement d'autres chlorures alcalins ou alcalino-terreux. Les chlorures alcalins ou alcalino-terreux peuvent notamment être choisis parmi les chlorures de sodium, rubidium, strontium, magnésium, calcium et baryum. Selon l'invention, on utilise avantageusement des mélanges binaires comportant le chlorure de lithium et le chlorure de potassium ou des mélanges ternaires comportant outre ces deux chlorures, le chlorure de calcium ou le chlorure de baryum.

La composition des mélanges de sels fondus mis en œuvre selon le procédé de l'invention est voisine de la composition eutectique connue desdits mélanges. Selon la première étape du procédé de l'invention, on met de préférence en œuvre des mélanges de sels fondus qui initialement, par rapport à la composition eutectique, présentent un déficit en chlorure de lithium au plus égal à 10 % en moles. A l'issue de la deuxième étape, la composition du mélange des sels fondus par raport à la composition eutectique présente de préférence un excès en chlorure de lithium au plus égal à 10 % en moles.

La quantité d'hydrure de lithium mise en œuvre dans la première étape représente au plus 20 % en moles, et de préférence 12 % à 18 % par rapport au mélange des sels fondus. La quantité initiale d'hydrure de lithium qui, à l'issue des deux étapes est complètement transformé en chlorure de lithium, est limitée compte tenu du déficit et de l'excès maximum de chlorure de lithium dans le mélange de sels fondus qui ont été donnés ci-dessus.

Selon le procédé de l'invention, la température de réaction entre les chlorosilanes et l'hydrure de lithium dans la première et la deuxième étape est avantageusement comprise entre 350 °C et 410 °C. Si cette température est trop basse, il peut se produire une cristallisation partielle du mélange de sels fondus et si cette température est trop élevée, il se produit un craquage partiel du silane.

Selon une variante du procédé de l'invention, on peut réaliser la préparation du silane en remplaçant l'hydrure de lithium par un mélange hydrure de lithium-hydrure de calcium.

La présente invention concerne également le dispositif utilisable pour la mise en œuvre du procédé de l'invention, ce dispositif est caractérisé en ce qu'il comporte deux réacteurs agités et un dispositif de séparation du mélange gazeux sortant du deuxième réacteur.

— le premier réacteur est alimenté par des chlorosilanes et l'hydrure de lithium dans le mélange de sels fondus, on soutire de ce réacteur, d'une part le silane produit et, d'autre part, un mélange comportant le mélange de sels fondus et l'hydrure de lithium non réagi,

— le deuxième réacteur est alimenté par des chlorosilanes et le mélange comportant le mélange de

sels fondus et l'hydrure de lithium non réagi issu du premier réacteur, on soutire de ce deuxième réacteur un mélange gazeux contenant le silane et des chlorosilanes et un mélange de sels fondus exempt d'hydrure de lithium.

— le mélange gazeux sortant du deuxième réacteur est séparé dans un dispositif qui est avantageusement une colonne à distiller pour en récupérer, d'autre part, le silane et, d'autre part, les chlorosilanes qui peuvent être recyclés dans le premier et/ou le deuxième réacteur. Ce dispositif de séparation peut également et notamment être constitué par un dispositif d'adsorption.

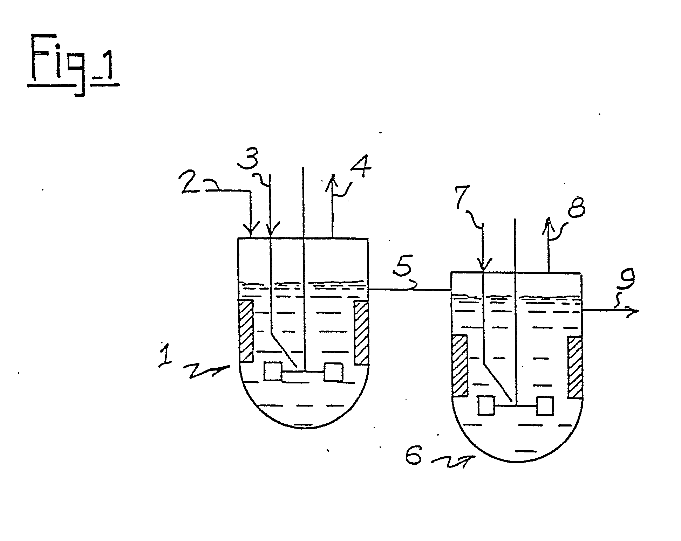

Le dispositif selon l'invention est décrit ci-après dans une mise en œuvre préférée en se référant à la figure 1 ci-jointe.

Sur cette figure, on a représenté :

— en (1) le premier réacteur, ce réacteur est alimenté par la canalisation (2) par un mélange de sels fondus constitué de chlorure de lithium et de chlorure de potassium, la composition de ce mélange présentant par rapport à la composition eutectique, un déficit en chlorure de lithium d'au plus 10 % en moles ; ce mélange contient en outre au plus 20 % en mole d'hydrure de lithium ; ce réacteur est également alimenté par la canalisation (3) par un mélange gazeux de chlorosilanes constitué de 90 % en mole de trichlorosilane et 10 % en mole de tétrachlorosilane ; la quantité des chlorosilanes mise en œuvre représente un défaut d'au moins 5 % par rapport à la quantité stœchiométrique nécessaire à la réaction avec l'hydrure de lithium ; de ce réacteur (1) on soutire par la canalisation (4) du silane exempt de chlorosilanes et par la canalisation (5) un mélange fondu comportant l'hydrure de lithium non réagi et le mélange de sels fondus, la composition du mélange de sels fondus correspondant à la composition initialement introduite dans le réacteur à laquelle s'est ajoutée la quantité de chlorure de lithium provenant de la réaction entre les chlorosilanes et l'hydrure de lithium ;

— en (6) le deuxième réacteur ; ce deuxième réacteur est alimenté d'une part par le mélange amené par la canalisation (5) et, d'autre part, par un mélange gazeux de chlorosilanes dont la composition est identique à celle mise en œuvre dans le réacteur (1) ; la quantité des chlorosilanes mise en œuvre dans ce deuxième réacteur représente un excès d'au moins 2 % par rapport à la quantité stœchiométrique nécessaire à la réaction avec l'hydrure de lithium ; de ce réacteur (6) on soutire d'une part par la canalisation (8) un mélange gazeux constitué du silane produit et des chlorosilanes et, d'autre part, par la canalisation (9) le mélange de sels fondus dont la composition correspond à celle introduite dans le deuxième réacteur additionnée de la quantité de chlorure de lithium provenant de la réaction entre les chlorosilanes et l'hydrure de lithium ; la quantité de chlorure de lithium contenue dans le mélange de sels correspondant à un excès au plus égal à 10 % en mole par rapport à la composition eutectique connue dudit mélange ; le mélange sortant de la canalisation (9) peut comporter de fines particules de silicium dispersées dans ledit mélange, ces particules sont avantageusement éliminées par filtration ;

— le mélange gazeux sortant par la canalisation (8) du réacteur (6) est soumis à une distillation qui permet de séparer les chlorosilanes du silane.

On donne ci-après un exemple de mise en œuvre du procédé de l'invention dans le dispositif qui est illustré à la figure 1 ci-jointe.

On réalise le procédé de l'invention dans les réacteurs (1) et (6) agités. Le réacteur (1) est maintenu à la température à 390 °C et le réaction (6) à la température de 400 °C. L'agitation des réacteurs est réalisée par une turbine Rushton à 6 pales droites, la vitesse en bout de pale de l'agitateur étant de 2m/s. L'alimentation des gaz est faite au-dessus du plan de l'agitateur.

Le réacteur (1) est alimenté par le flux (2) à un débit de 200 moles/h et constitué d'un mélange fondu comportant 45,9 moles % de LiCl, 36,1 mole % de KCl et 18,0 mole % d'hydrure de lithium ; la composition de ce mélange fondu correspond à un défaut de 2,8 % en mole de LiCl par rapport à la composition eutectique ; le réacteur (1) est également alimenté par un flux gazeux (3) de 9,30 moles/h de chlorosilanes constitué de 90 % en mole de trichlorosilane et 10 % en mole de tétrachlorosilane, la quantité de chlorosilanes ainsi mise en œuvre correspond à un défaut de 20 % par rapport à la stœchiométrie de la réaction entre l'hydrure de lithium introduit dans le flux (2) et les chlorosilanes introduits dans le flux (3).

On soutire du réacteur (1) un flux gazeux (4) constitué par du silane exempt de chlorosilane (à la limite de détection de 10 ppm volume) et un flux de sels fondus (5) à un débit de 200 moles/h constitué de 60,3 % mole % de LiCl, 36,1 mole % de KCl et 3,6 mole % de LiH.

Le réacteur (6) est alimenté par le flux (5) et selon le flux gazeux (7) par un mélange de chlorosilanes de composition identique à celle du flux (3) et avec un débit de 2,4 moles/h qui correspond à un excès de 33 % par rapport à la quantité stœchiométrique nécessaire à la réaction avec l'hydrure de lithium. Le flux gazeux (8) sortant du réacteur (6) est constitué de silane et de chlorosilanes ; ce flux est soumis à une distillation dans une colonne à distiller ; cette distillation permet de séparer le silane des chlorosilanes ; les chlorosilanes sont recyclés dans le dispositif et le silane est soutiré avec le flux (4) pour constituer la production du dispositif. Le flux de sels fondus (9) sortant du réacteur (6) est constitué de 63,9 mole % de LiCl et 36,1 mole % de KCl, composition qui correspond à un excès de 5,1 mole % de LiCl par rapport à la composition eutectique.

**Revendications**

1. Procédé de préparation de silane par réaction de chlorosilanes avec l'hydrure de lithium dans un

mélange de sels fondus dont la composition est voisine de la composition eutectique caractérisé en ce que

— le mélange de sels fondus est constitué par du chlorure de lithium, du chlorure de potassium et, éventuellement, d'autres chlorures d'alcalins ou d'alcalino-terreux,

— la réaction est effectuée en deux étapes :

a) dans la première étape, on opère la réaction entre des chlorosilanes et l'hydrure de lithium dans le mélange de sels fondus en mettant en œuvre une quantité de chlorosilanes en défaut par rapport à la quantité stœchiométrique nécessaire à la réaction avec l'hydrure de lithium ; ce défaut représente au moins 5 % et de préférence 5 à 20 % par rapport à ladite quantité stœchiométrique ; dans cette première étape, la quantité d'hydrure de lithium mise en œuvre représente au plus 20 % et de préférence est comprise entre 12 et 18 % en mole par rapport au mélange des sels fondus.

b) dans la deuxième étape, on opère la réaction entre l'hydrure de lithium non réagi provenant de la première étape, dissout dans le mélange de sels fondus et des chlorosilanes en mettant en œuvre une quantité de chlorosilanes en excès par rapport à la quantité stœchiométrique nécessaire à la réaction avec ledit hydrure de lithium, cet excès représente au moins 2 % et de préférence 2 à 10 % par rapport à ladite quantité stœchiométrique.

2. Procédé selon la revendication 1 caractérisé en ce que, selon la première étape, le mélange de sels présente initialement par rapport à la composition eutectique, un déficit en chlorure de lithium au plus égal à 10 % en moles et en ce que, à l'issue de la deuxième étape, la composition du mélange des sels fondus présente par rapport à la composition eutectique, un excès en chlorure de lithium au plus égal à 10 % en moles.

3. Procédé selon l'une quelconque des revendications 1 et 2 caractérisé en ce que la température de réaction entre les chlorosilanes et l'hydrure de lithium dans la première et la deuxième étape est comprise entre 350 °C et 410 °C.

4. Dispositif pour la mise en œuvre de procédé selon l'une quelconque des revendications précédentes caractérisé en ce qu'il comporte deux réacteurs agités et un dispositif de séparation du mélange gazeux sortant du deuxième réacteur,

— le premier réacteur est alimenté par des chlorosilanes et l'hydrure de lithium dans le mélange de sels fondus, on soutire de ce réacteur, d'une part le silane produit et, d'autre part, un mélange comportant le mélange de sels fondus et l'hydrure de lithium non réagi,

— le deuxième réacteur est alimenté par des chlorosilanes et le mélange comportant le mélange de sels fondus et l'hydrure de lithium non réagi issu du premier réacteur, on soutire de ce deuxième réacteur un mélange gazeux contenant le silane et des chlorosilanes et un mélange de sels fondus exempt d'hydrure de lithium,

— le mélange gazeux sortant du deuxième réacteur est séparé dans un dispositif qui est avantageusement une colonne à distiller pour en récupérer, d'une part, le silane et, d'autre part, les chlorosilanes qui peuvent être recyclés dans le premier et/ou le deuxième réacteur.

## Claims

1. Process for preparing silane by the reaction of chlorosilanes with lithium hydride in a mixture of molten salts the composition of which is close to the eutectic composition, characterised in that

— the mixture of molten salts consists of lithium chloride, potassium chloride and, optionally, other alkali metal or alkaline-earth metal chlorides,

— the reaction is carried out in two steps :

a) in the first step, the reaction between chlorosilanes and lithium hydride in the mxiture of molten salts is carried out with the use of a quantity of chlorosilanes which is deficient relative to the stoichiometric quantity required for the reaction with lithium hydride ; this deficiency represents at least 5 % and preferably 5 % to 20 % relative to the said stoichiometric quantity ; in this first step the quantity of lithium hydride employed represents at most 20 % and preferably is between 12 and 18 mole % relative to the mixture of molten salts,

b) in the second step, the reaction between unreacted lithium hydride originating from the first step, dissolved in the mixture of molten salts, and the chlorosilanes is carried out with the use of a quantity of chlorosilanes in excess relative to the stoichiometric quantity required for the reaction with the said lithium hydride ; this excess represents at least 2 % and preferably 2 % to 10 % relative to the said stoichiometric quantity.

2. Process according to Claim 1, characterised in that, depending on the first step, the mixture of salts initially has a deficiency of lithium chloride which is at most equal to 10 mole % relative to the eutectic composition and in that, at the end of the second step, the composition of the mixture of molten salts has an excess of lithium chloride which is at most equal to 10 mole % relative to the eutectic composition.

3. Process according to either of Claims 1 and 2, characterised in that the temperature of reaction between the chlorosilanes and lithium hydride in the first and the second step is between 350 °C and 410 °C.

4. Device for making use of the process according to any one of the preceding claims, characterised in that it comprises two stirred reactors and a device for separating the gaseous mixture leaving the second reactor,

— the first reactor is supplied with chlorosilanes and lithium chloride in the mixture of molten salts ; from this reactor are drawn off, on the one hand, the silane produced and, on the other hand, a mixture containing the mixture of molten salts and the unreacted lithium hydride,

— the second reactor is supplied with chlorosilanes and the mixture containing the mixture of molten salts and the unreacted lithium hydride originating from the first reactor ; from this second reactor are drawn off a gaseous mixture containing silane and chlorosilanes and a mixture of molten salts free from lithium hydride,

— the gaseous mixture leaving the second reactor is separated in a device which is advantageously a distillation column to recover therefrom, on the one hand, silane and, on the other hand, the chlorosilanes which may be recycled to the first and/or the second reactor.

**Patentansprüche**

1. Verfahren zur Herstellung von Silan durch Reaktion von Chlorsilanen mit Lithiumhydrid in einer Mischung von geschmolzenen Salzen, deren Zusammensetzung der eutektischen Zusammensetzung nah ist, dadurch gekennzeichnet, daß

— das Gemisch der geschmolzenen Salze aus Lithiumchlorid, Kaliumchlorid und gegebenenfalls anderen Alkali- oder Erdalkalichloriden besteht,

— die Reaktion in zwei Stufen durchgeführt wird :

a) in der ersten Stufe führt man die Reaktion zwischen Chlorsilanen und dem Lithiumhydrid in dem Gemisch von geschmolzenen Salzen durch, indem man eine Chlorsilanmenge im Unterschuß, bezogen auf die für die Reaktion mit Lithiumhydrid erforderliche stöchiometrische Menge, einsetzt ; dieser Unterschuß beträgt mindestens 5 % und vorzugsweise 5 bis 20 %, bezogen auf die genannte stöchiometrische Menge ; in dieser ersten Stufe beträgt die Menge des eingesetzten Lithiumhydrids höchstens 20 % und vorzugsweise zwischen 12 und 18 % der Molmenge, bezogen auf das Gemisch der geschmolzenen Salze ;

b) in der zweiten Stufe führt man die Reaktion zwischen dem nicht umgesetzten Lithiumhydrid aus der ersten Stufe, das in der Mischung der geschmolzenen Salze gelöst ist, und Chlorsilanen durch, indem man eine Chlorsilanmenge im Überschuss, bezogen auf die für die Reaktion mit dem Lithiumhydrid erforderliche stöchiometrische Menge einsetzt ; dieser Überschuss beträgt mindestens 2 % und vorzugsweise 2 bis 10 %, bezogen auf die genannte stöchiometrische Menge.

2. Verfahren nach Anspruch 1, dadurch gekennzeichnet, daß gemäß der ersten Stufe das Salzgemisch zu Beginn, bezogen auf die eutektische Zusammensetzung, ein Defizit an Lithiumchlorid von höchstens 10 Mol % aufweist, und dadurch, daß am Ende der zweiten Stufe die Zusammensetzung des Gemischs der geschmolzenen Salze, bezogen auf die eutektische Zusammensetzung, einen Überschuss an Lithiumchlorid von höchstens 10 Mol % aufweist.

3. Verfahren nach einem der Ansprüche 1 oder 2, dadurch gekennzeichnet, daß die Temperatur der Reaktion zwischen den Chlorsilanen und dem Lithiumhydrid in der ersten und der zweiten Stufe zwischen 350° und 410 °C beträgt.

4. Vorrichtung zur Durchführung des Verfahrens nach einem der vorangehenden Ansprüche, dadurch gekennzeichnet, daß sie zwei Reaktoren mit Rührvorrichtung und eine Vorrichtung zur Abtrennung des gasförmigen Gemischs, das aus dem zweiten Reaktor austritt, umfasst.

— der erste Reaktor wird mit Chlorsilanen und Lithiumhydrid in der Mischung der geschmolzenen Salze beschickt, aus diesem Reaktor zieht man einerseits das erzeugte Silan und andererseits ein Gemisch ab, das das Gemisch der geschmolzenen Salze und das nicht umgesetzte Lithiumhydrid umfasst,

— der zweite Reaktor wird mit Chlorsilanen und dem Gemisch, das die Mischung der geschmolzenen Salze und das nicht umgesetzte Lithiumhydrid aus dem ersten Reaktor umfasst, beschickt, man zieht aus diesem zweiten Reaktor eine gasförmige Mischung, die das Silan und Chlorsilane enthält, und ein Gemisch von geschmolzenen Salzen, das frei von Lithiumhydrid ist, ab,

— das gasförmige Gemisch, das den zweiten Reaktor verläßt, wird in einer Vorrichtung getrennt, die vorteilhaft eine Destillationskolonne zur Rückgewinnung einerseits des Silans und andererseits der Chlorsilane, die in den ersten und/oder den zweiten Reaktor zurückgeführt werden können, ist.

Fig_1